(19) Europäisches Patentamt / European Patent Office / Office européen des brevets

(11) **EP 3 918 727 B1**

(12) **FASCICULE DE BREVET EUROPEEN**

(45) Date de publication et mention de la délivrance du brevet:
**12.10.2022 Bulletin 2022/41**

(21) Numéro de dépôt: **20701355.8**

(22) Date de dépôt: **28.01.2020**

(51) Classification Internationale des Brevets (IPC):
**H04B 7/155** (2006.01)

(52) Classification Coopérative des Brevets (CPC):
**H04B 7/15542**

(86) Numéro de dépôt international:
**PCT/EP2020/051982**

(87) Numéro de publication internationale:
**WO 2020/157033 (06.08.2020 Gazette 2020/32)**

(54) **PROCÉDÉ ET SYSTÈME DE COMMUNICATION SANS FIL ENTRE UN DISPOSITIF ÉMETTEUR ET UN DISPOSITIF RÉCEPTEUR AU MOYEN D'UN DISPOSITIF RÉPÉTEUR, SANS PERTE D'INFORMATION SUR UNE PROPRIÉTÉ PHYSIQUE**

DRAHTLOSES KOMMUNIKATIONSVERFAHREN UND -SYSTEM ZWISCHEN EINEM SENDEGERÄT UND EINEM EMPFANGSGERÄT DURCH EINEN REPEATER, OHNE INFORMATIONSVERLUST ÜBER EINE PHYSIKALISCHE EIGENSCHAFT

WIRELESS COMMUNICATION METHOD AND SYSTEM BETWEEN A TRANSMITTING DEVICE AND A RECEIVING DEVICE USING A REPEATING DEVICE, WITHOUT LOSS OF INFORMATION ON A PHYSICAL CHARACTERISTIC

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.02.2019 FR 1900995**

(43) Date de publication de la demande:
**08.12.2021 Bulletin 2021/49**

(73) Titulaire: **Sigfox**
**31670 Labege (FR)**

(72) Inventeurs:
- **CHALBOS, Nicolas**
  **31600 EAUNES (FR)**
- **HUBERT, Loïc**
  **31410 Saint-Sulpice-Sur-Lèze (FR)**
- **MANSUY, Arnaud**
  **31300 TOULOUSE (FR)**

(74) Mandataire: **Ipside**
**6, Impasse Michel Labrousse**
**31100 Toulouse (FR)**

(56) Documents cités:
**US-A1- 2006 153 132    US-A1- 2018 062 803**

## Description

### Domaine de l'invention

La présente invention appartient au domaine des télécommunications numériques, et concerne plus particulièrement un procédé et un système de communication sans fil entre un dispositif émetteur et un dispositif récepteur par l'intermédiaire d'un dispositif répéteur.

### Etat de la technique

De manière conventionnelle, un dispositif répéteur peut être mis en œuvre, par exemple, pour augmenter la portée d'un système de communication sans fil comportant des terminaux et un réseau d'accès sans fil comportant une pluralité de stations de base. En effet, il peut parfois se produire, pour diverses raisons, que des terminaux se trouvent hors de portée des stations de base, de sorte que les messages émis par ces terminaux ne peuvent pas être reçus par le réseau d'accès sans fil.

Dans un tel cas, il est possible de prévoir un dispositif répéteur, placé par exemple entre lesdites terminaux et une station de base dudit réseau d'accès sans fil, de telle sorte que ledit dispositif répéteur est adapté à recevoir les messages émis par les terminaux, et de telle sorte que le réseau d'accès sans fil est adapté à recevoir les messages émis par le dispositif répéteur. Dans un tel cas, le dispositif répéteur retransmet à destination du réseau d'accès sans fil les messages préalablement reçus desdits terminaux, de sorte que les terminaux peuvent échanger des messages avec ledit réseau d'accès sans fil par l'intermédiaire dudit dispositif répéteur.

Un inconvénient est que certaines informations, relatives à une propriété physique des messages reçus, peuvent être perdues lors de la mise en œuvre de tels dispositifs répéteurs. Or de telles informations peuvent être utiles pour certaines applications, notamment pour la géolocalisation.

Par exemple, les instants de réception d'un même message par plusieurs dispositifs récepteurs et/ou dispositifs répéteurs de positions géographiques respectives connues permettent d'estimer la position géographique du dispositif émetteur qui a émis ledit message. En retransmettant le message, l'information sur la valeur de l'instant de réception dudit message par le dispositif répéteur peut être perdue.

De manière analogue, les puissances de réception d'un même message par plusieurs dispositifs récepteurs et/ou dispositifs répéteurs de positions géographiques respectives connues permettent d'estimer la position géographique du dispositif émetteur. Or du fait que les messages sont amplifiés par le dispositif répéteur, l'information sur la valeur de la puissance de réception dudit message par le dispositif répéteur peut être perdue.

Suivant encore un exemple, les fréquences de réception d'un même message par plusieurs dispositifs récepteurs et/ou dispositifs répéteurs de positions géographiques respectives connues permettent d'estimer la position géographique du dispositif émetteur (par des techniques connues dans la littérature anglo-saxonne sous le nom de « Frequency Différence of Arrivai » ou FDOA). En retransmettant le message, l'information sur la valeur de la fréquence de réception dudit message par le dispositif répéteur peut être perdue, en particulier si le dispositif répéteur retransmet le message reçu sur une fréquence différente de celle sur laquelle il a reçu ledit message.

Une solution possible réside dans l'ajout, dans les données incluses dans le message reçu, de données additionnelles représentatives de la valeur de la propriété physique considérée (par exemple instant de réception, puissance de réception, fréquence de réception, etc.).

Toutefois, une telle solution implique de démoduler et de décoder entièrement chaque message reçu, d'ajouter les données additionnelles, puis de réencoder et de remoduler le tout (données incluses initialement dans le message reçu et les données additionnelles). Ainsi, la complexité de calcul associée peut être élevée si le nombre de messages à retransmettre est important. En particulier, pour des applications du type M2M (acronyme anglo-saxon pour « Machine-to-Machine ») ou du type « Internet des objets » (« Internet of Things » ou IoT dans la littérature anglo-saxonne), le nombre de terminaux susceptibles d'émettre des messages à retransmettre peut s'avérer très élevé, et peut nécessiter une complexité de calcul trop importante.

En outre, une telle solution implique d'augmenter la quantité de données incluses dans chaque message, et donc d'augmenter la durée de chaque message. Or dans les applications du type M2M et IoT, la durée de chaque message doit de préférence être réduite au maximum.

Enfin, il n'est parfois pas possible d'ajouter des données additionnelles dans les données incluses dans le message reçu. C'est le cas notamment lorsque les données incluses dans le message reçu comportent des données utiles et des données de contrôle, les données de contrôle étant incluses à des fins de sécurité et étant déterminées à partir desdites données utiles et d'une clé privée non connue a priori du dispositif répéteur. Dans un tel cas, l'ajout de données additionnelles par le dispositif répéteur risquerait de compromettre la sécurité du système de communication sans fil.

**Exposé de l'invention**

La présente invention a pour objectif de remédier à tout ou partie des limitations des solutions de l'art antérieur, notamment celles exposées ci-avant, en proposant une solution qui permette de conserver, lors de la retransmission, des informations relatives à une propriété physique d'un message reçu, sans avoir à augmenter la durée dudit message lors de la retransmission.

A cet effet, et selon un premier aspect, l'invention concerne un procédé de communication sans fil entre un dispositif émetteur et un dispositif récepteur par l'intermédiaire d'un dispositif répéteur, ledit dispositif émetteur émettant un message dans une bande fréquentielle qui est reçu par ledit dispositif répéteur, ledit dispositif répéteur retransmettant dans ladite bande fréquentielle le message reçu à destination dudit dispositif récepteur. Le procédé comporte des étapes de :

- mesure, par le dispositif répéteur, de la valeur d'une première propriété physique du message reçu du dispositif émetteur,
- détermination, par le dispositif répéteur et en fonction de la valeur de la première propriété physique mesurée pour le message reçu, de la valeur d'une seconde propriété physique à utiliser lors de la retransmission dudit message, la seconde propriété physique étant différente de la première propriété physique,
- retransmission, par le dispositif répéteur, du message à destination du dispositif récepteur, en utilisant la valeur de la seconde propriété physique déterminée en fonction de la valeur de la première propriété physique mesurée pour le message reçu.

Ainsi, pour chaque message reçu, le dispositif répéteur mesure la valeur de la première propriété physique considérée, susceptible d'être perdue lors de la retransmission dudit message. A partir de la valeur mesurée, le dispositif répéteur détermine la valeur d'une seconde propriété physique, différente de la première propriété physique, à utiliser lors de la retransmission du message. La première propriété physique et la seconde propriété physique sont différentes, c'est-à-dire qu'elles sont de types respectifs différents. Par exemple, le temps (par exemple l'instant de réception ou de retransmission du message), la fréquence, la puissance et la phase correspondent à quatre propriétés physiques de types différents.

Par exemple, la première propriété physique correspond à l'instant de réception du message par le dispositif répéteur, et la seconde propriété physique correspond à la fréquence sur laquelle ledit message est retransmis. Ainsi, le dispositif répéteur mesure l'instant de réception du message, détermine la fréquence de retransmission en fonction de l'instant de réception dudit message, et retransmet ledit message sur la fréquence de retransmission déterminée. Un dispositif récepteur qui reçoit le message retransmis peut alors estimer l'instant auquel le dispositif répéteur a reçu ce message en fonction de la fréquence sur lequel ce message a été retransmis par le dispositif répéteur. Suivant un autre exemple, la première propriété physique correspond à la puissance de réception du message par le dispositif répéteur, et la seconde propriété physique correspond à la fréquence sur laquelle ledit message est retransmis. Ainsi, le dispositif répéteur mesure la puissance de réception du message, détermine la fréquence de retransmission en fonction de la puissance de réception dudit message, et retransmet ledit message sur la fréquence de retransmission déterminée. Un dispositif récepteur qui reçoit le message retransmis peut alors estimer la puissance avec laquelle le dispositif répéteur a reçu ce message en fonction de la fréquence sur lequel ce message a été retransmis par le dispositif répéteur.

La valeur de la première propriété physique du message reçu est susceptible d'être perdue, notamment, si le nombre de valeurs possibles pour la première propriété physique lors de la retransmission est très réduit. C'est pourquoi il est avantageux d'encoder la valeur de la première propriété physique du message reçu dans la valeur d'une seconde propriété physique du message retransmis, si le nombre de valeurs possibles pour la seconde propriété physique lors de la retransmission est plus important.

Par exemple, si la première propriété physique correspond à l'instant de réception d'un message, et si le dispositif répéteur ne retransmet pas immédiatement chaque message reçu (par exemple parce qu'il collecte des messages pendant une fenêtre de collecte de durée prédéterminée afin de les retransmettre simultanément), alors l'information sur l'instant de réception de chaque message est perdue. En effet, pour tous les messages reçus durant la fenêtre de collecte, il n'existe alors qu'un seul instant de retransmission possible. Il est alors avantageux d'encoder cette information dans une autre propriété physique du message retransmis, par exemple dans la fréquence de retransmission du message.

Suivant un autre exemple, si la première propriété physique correspond à la puissance de réception d'un message, et si le dispositif répéteur retransmet chaque message reçu avec une puissance de retransmission prédéfinie, identique pour tous les messages, alors l'information sur la puissance de réception de chaque message est perdue. En effet, quelle que soit la puissance de réception dudit message, il n'existe alors qu'une seule puissance de retransmission possible. Il est alors avantageux d'encoder cette information dans une autre propriété physique du message retransmis, par exemple dans la fréquence de retransmission du message.

En outre, seule la seconde propriété physique du message retransmis est utilisée pour encoder la valeur de la première propriété physique. Par conséquent, aucune donnée additionnelle n'est ajoutée aux données incluses par le dispositif émetteur dans le message reçu. En effet, le dispositif émetteur forme des données qui sont encodées et modulées sous la forme d'un message qui se présente sous la forme d'un signal radioélectrique. Ces données sont retransmises inchangées par le dispositif répéteur, et sans ajouter de données additionnelles qui seraient également encodées et modulées selon le même protocole que pour les données émises par le dispositif émetteur. La durée du message retransmis est donc la même que celle du message reçu. Seule la valeur de la seconde propriété physique du message retransmis est impactée par l'invention. Cette seconde propriété physique, qui ne portait aucune information dans l'art antérieur, est avantageusement utilisée pour encoder la valeur de la première propriété physique du message reçu.

Dans des modes particuliers de mise en œuvre, le procédé de communication sans fil peut comporter en outre l'une ou plusieurs des caractéristiques suivantes, prises isolément ou selon toutes les combinaisons techniquement possibles.

Dans des modes particuliers de mise en œuvre, la valeur de la seconde propriété physique du message retransmis est déterminée de telle sorte qu'un écart entre ladite valeur de la seconde propriété physique dudit message retransmis et une valeur de référence prédéterminée de ladite seconde propriété physique est représentatif d'un écart entre une valeur de référence de la première propriété physique et la valeur de ladite première propriété physique mesurée pour le message reçu.

Dans des modes particuliers de mise en œuvre, le procédé de communication sans fil comporte une étape de formation et de transmission, par le dispositif répéteur, d'un message de référence en utilisant la valeur de référence de la seconde propriété physique.

Dans des modes particuliers de mise en œuvre, le procédé de communication sans fil comporte des étapes de :

- mesure, par le dispositif récepteur, de la valeur de la seconde propriété physique du message reçu du dispositif répéteur,
- détermination, par le dispositif récepteur, de la valeur de la première propriété physique du message reçu par le dispositif répéteur en fonction de la valeur de la seconde propriété physique mesurée pour le message reçu par ledit dispositif récepteur.

Dans des modes particuliers de mise en œuvre, la première propriété physique est l'instant auquel le message est reçu par le dispositif répéteur, et la seconde propriété physique est une propriété physique parmi les propriétés physiques suivantes :

- fréquence sur laquelle ledit message est retransmis,
- puissance avec laquelle ledit message est retransmis,
- phase avec laquelle ledit message est retransmis.

Dans des modes particuliers de mise en œuvre, la première propriété physique est la puissance avec laquelle le message est reçu par le dispositif répéteur, et la seconde propriété physique est une propriété physique parmi les propriétés physiques suivantes :

- instant auquel ledit message est retransmis,
- fréquence sur laquelle ledit message est retransmis,
- phase avec laquelle ledit message est retransmis.

Dans des modes particuliers de mise en œuvre, la première propriété physique est la fréquence sur laquelle le message est reçu par le dispositif répéteur, et la seconde propriété physique est une propriété physique parmi les propriétés physiques suivantes :

- instant auquel ledit message est retransmis,
- puissance avec laquelle ledit message est retransmis,
- phase avec laquelle ledit message est retransmis.

Selon un second aspect, la présente invention concerne un dispositif répéteur adapté à recevoir un message émis dans une bande fréquentielle par un dispositif émetteur et à retransmettre dans ladite bande fréquentielle le message reçu à destination d'un dispositif récepteur. Le dispositif répéteur comporte des moyens configurés pour :

- mesurer la valeur d'une première propriété physique du message reçu du dispositif émetteur,
- déterminer, en fonction de la valeur de la première propriété physique mesurée pour le message reçu, la valeur d'une seconde propriété physique à utiliser lors de la retransmission dudit message, la seconde propriété physique étant différente de la première propriété physique,
- retransmettre le message à destination du dispositif récepteur (30), en utilisant la valeur de la seconde propriété physique déterminée en fonction de la valeur de la première propriété physique mesurée pour le message reçu. Dans des modes particuliers de réalisation, le dispositif répéteur peut comporter en outre l'une ou plusieurs des caractéristiques suivantes, prises isolément ou selon toutes les combinaisons techniquement possibles.

Dans des modes particuliers de réalisation, le dispositif répéteur est configuré pour déterminer la valeur de la seconde propriété physique du message retransmis de telle sorte qu'un écart entre ladite valeur de la seconde propriété physique dudit message retransmis et une valeur de référence prédéterminée de ladite seconde propriété physique est représentatif d'un écart entre une valeur de référence de la première propriété physique et la valeur de ladite première propriété physique mesurée pour le message reçu.

Dans des modes particuliers de réalisation, le dispositif répéteur comporte des moyens configurés pour former et transmettre un message de référence en utilisant la valeur de référence de la seconde propriété physique.

Selon un troisième aspect, la présente invention concerne un système de communication sans fil comportant un dispositif récepteur et un dispositif répéteur selon l'un quelconque des modes de réalisation de l'invention, et le dispositif récepteur comporte des moyens configurés pour :

- mesurer la valeur de la seconde propriété physique du message reçu du dispositif répéteur,
- déterminer la valeur de la première propriété physique du message reçu par le dispositif répéteur en fonction de la valeur de la seconde propriété physique mesurée pour le message reçu par ledit dispositif récepteur.

## Présentation des figures

L'invention sera mieux comprise à la lecture de la description suivante, donnée à titre d'exemple nullement limitatif, et faite en se référant aux figures qui représentent :

[Fig. 1] Figure 1 : une représentation schématique d'un exemple de réalisation d'un système de communication sans fil,
[Fig. 2] Figure 2 : une représentation schématique d'un exemple de réalisation d'un dispositif répéteur,
[Fig. 3] Figure 3 : un diagramme illustrant les principales étapes d'un procédé de communication sans fil,
[Fig. 4] Figure 4 : un diagramme illustrant le fonctionnement d'un premier exemple de mise en œuvre du procédé de communication sans fil de la figure 3,
[Fig. 5] Figure 5 : un diagramme illustrant le fonctionnement d'un second exemple de mise en œuvre du procédé de communication sans fil de la figure 3,
[Fig. 6] Figure 6 : un diagramme illustrant le fonctionnement d'un troisième exemple de mise en œuvre du procédé de communication sans fil de la figure 3,
[Fig. 7] Figure 7 : un diagramme illustrant le fonctionnement d'un quatrième exemple de mise en œuvre du procédé de communication sans fil de la figure 3.

Dans ces figures, des références identiques d'une figure à une autre désignent des éléments identiques ou analogues. Pour des raisons de clarté, les éléments représentés ne sont pas à l'échelle, sauf mention contraire.

## Description des modes de réalisation

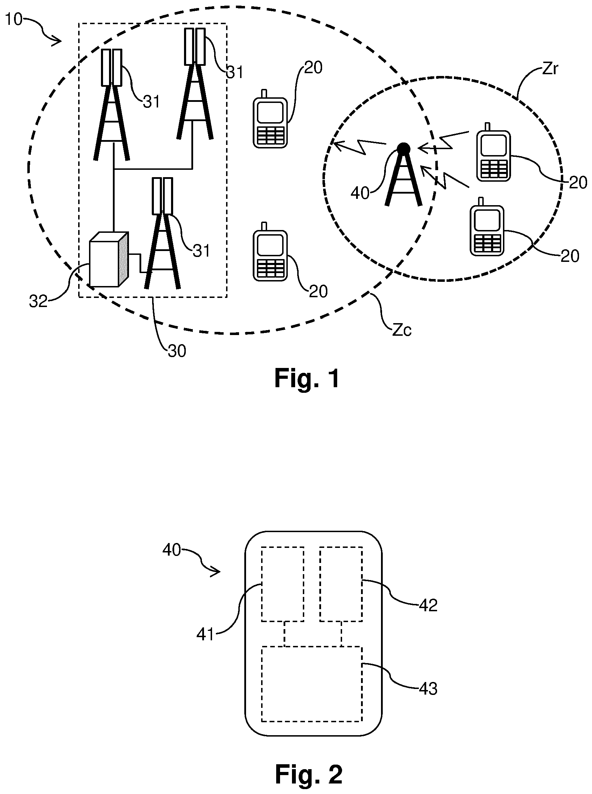

La figure 1 représente schématiquement un système 10 de communication sans fil, comportant plusieurs terminaux 20 et un réseau d'accès 30 comportant plusieurs stations de base 31.

Les terminaux 20 et les stations de base 31 du réseau d'accès échangent des messages sous la forme de signaux radioélectriques. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz).

Les terminaux 20 sont par exemple adaptés à émettre des messages sur un lien montant à destination du réseau d'accès 30, dans une bande fréquentielle prédéfinie. La bande fréquentielle utilisée sur le lien montant est de préférence une bande ISM (« Industrial, Scientific and Médical »), par exemple de fréquences inférieures à 1 gigahertz. Chaque station de base 31 est adaptée à recevoir les messages des terminaux 20 qui se trouvent à sa portée. Chaque message ainsi reçu est par exemple transmis à un serveur 32 du réseau d'accès 30, éventuellement accompagné d'autres informations comme un identifiant de la station de base 31 qui l'a reçu, la fréquence dudit message reçu, etc. Le serveur 32 traite par exemple l'ensemble des messages reçus par les stations de base 31.

En outre, le réseau d'accès 30 peut également être adapté à émettre, par l'intermédiaire des stations de base 31, des messages sur un lien descendant à destination des terminaux 20, lesquels sont le cas échéant adaptés à les recevoir. Les messages sont émis sur le lien descendant dans une bande fréquentielle prédéfinie. La bande fréquentielle utilisée sur le lien descendant peut être distincte de la bande fréquentielle utilisée sur le lien montant, ou bien la même bande fréquentielle peut être utilisée à la fois sur le lien montant et sur le lien descendant.

Tel qu'illustré par la figure 1, certains terminaux 20 se trouvent hors de portée du réseau d'accès 30, c'est-à-dire qu'ils se trouvent en dehors d'une zone de couverture Zc dudit réseau d'accès 30. Pour permettre à ces terminaux 20 d'échanger des messages avec le réseau d'accès 30, le système 10 de communication sans fil comporte un dispositif répéteur 40, qui est dans la zone de couverture Zc.

De préférence, le dispositif répéteur 40 est situé à la surface de la Terre. Par « situé à la surface de la Terre », on entend que le dispositif répéteur 40 est situé à une altitude égale ou inférieure à 25 kilomètres. En particulier, le dispositif répéteur 40 n'est alors pas embarqué dans un satellite en orbite terrestre. De préférence, tout ou partie des stations de base 31 et tout ou partie des terminaux 20 sont également situés à la surface de la Terre.

Dans la suite de la description, on se place de manière non limitative dans le cas où le dispositif répéteur 40 est mis en œuvre sur le lien montant, c'est-à-dire pour recevoir des messages émis par des terminaux 20 et les retransmettre à destination du réseau d'accès 30.

Rien n'exclut cependant, suivant d'autres exemples, de mettre en œuvre le dispositif répéteur 40 sur le lien descendant, c'est-à-dire pour recevoir des messages émis par des stations de base 31 et les retransmettre à destination des terminaux 20. De manière générale, le dispositif répéteur 40 peut être mis en œuvre sur le lien montant et/ou le lien descendant.

Le dispositif répéteur 40 peut mettre en œuvre des traitements plus ou moins complexes. Le choix d'un type particulier pour le dispositif répéteur 40 ne constitue qu'une variante d'implémentation de l'invention.

Le dispositif répéteur 40 est adapté à recevoir, dans la bande fréquentielle du lien montant, les messages des terminaux 20 qui se trouvent à sa portée (représentée par une zone de couverture Zr sur la figure 1). Les messages reçus sont retransmis, dans la bande fréquentielle du lien montant sur laquelle lesdits messages ont été reçus, à destination du réseau d'accès 30. Les messages retransmis sont reçus par au moins une station de base 31 à portée de laquelle se trouve le dispositif répéteur 40.

De préférence, les messages retransmis par le dispositif répéteur 40 sont mis en forme selon le même protocole de communication que les messages émis par les terminaux 20. Ainsi, une station de base 31 reçoit les messages retransmis par le dispositif répéteur 40 de la même façon que les messages reçus des terminaux 20 qui se trouvent à sa portée, et donc comme s'ils avaient été reçus directement des terminaux 20 qui se trouvent en dehors de sa portée. En d'autres termes, c'est un même module de réception de la station de base 31 qui est utilisé pour recevoir chaque message émis sur le lien montant, qu'il s'agisse d'un message émis par un terminal 20 ou d'un message retransmis par le dispositif répéteur 40.

La figure 2 représente schématiquement un exemple non limitatif de réalisation d'un dispositif répéteur 40. Tel qu'illustré par la figure 2, le dispositif répéteur 40 comporte un module de réception 41, un module d'émission 42 et un circuit de traitement 43.

Le module de réception 41 est adapté à recevoir les messages émis sur le lien montant et le module d'émission 42 est adapté à (re)transmettre des messages sur le lien montant. Le module de réception 41 et le module d'émission 42 comportent notamment des circuits radioélectriques respectifs comportant des équipements (antenne, amplificateur, oscillateur local, mélangeur, filtre analogique, etc.) connus de l'homme de l'art.

Le circuit de traitement 43 est adapté à mettre en œuvre les traitements nécessaires après réception par le module de réception 41 et avant (re)transmission par le module d'émission 42, et en particulier pour mettre en œuvre avec ledit module de réception 41 et ledit module d'émission 42 les étapes qui concernent le dispositif répéteur 40 d'un procédé 50 de communication sans fil qui sera décrit ci-après. Le circuit de traitement 43 comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter. Alternativement ou en complément, le circuit de traitement 43 comporte un ou des circuits logiques programmables (FPGA, PLD, etc.), et/ou un ou des circuits intégrés spécialisés (ASIC, etc.), et/ou un ensemble de composants électroniques discrets, etc.

En d'autres termes, le circuit de traitement 43, le module de réception 41 et le module d'émission 42 correspondent à des moyens configurés de façon logicielle (produit programme d'ordinateur spécifique) et/ou matérielle (FPGA, PLD, ASIC, composants électroniques discrets, circuit radioélectrique, etc.) pour mettre en œuvre les étapes qui concernent le dispositif répéteur 40 d'un procédé 50 de de communication sans fil décrit ci-après.

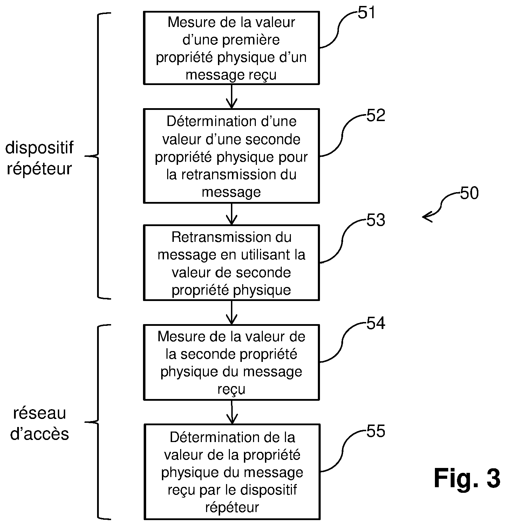

La figure 3 représente schématiquement les principales étapes d'un procédé 50 de communication sans fil entre les terminaux 20 et le réseau d'accès 30, par l'intermédiaire du dispositif répéteur 40.

Tel qu'illustré par la figure 3, le procédé 50 de communication sans fil comporte des étapes de :

- 51 mesure, par le dispositif répéteur 40, de la valeur d'une première propriété physique d'un message reçu d'un dispositif émetteur 20,
- 52 détermination, par le dispositif répéteur 40 et en fonction de la valeur de la première propriété physique mesurée pour le message reçu, de la valeur d'une seconde propriété physique à utiliser lors de la retransmission dudit message, la seconde propriété physique étant différente de la première propriété physique,
- 53 retransmission, par le dispositif répéteur 40, du message à destination à destination d'au moins une station de base 31 du réseau d'accès 30, en utilisant la valeur de la seconde propriété physique déterminée en fonction de la valeur de la première propriété physique mesurée pour le message reçu.

Ainsi, pour chaque message reçu, le dispositif répéteur 40 mesure la valeur de la propriété physique considérée, susceptible d'être perdue lors de la retransmission dudit message. A partir de la valeur mesurée, le dispositif répéteur 40 détermine la valeur d'une seconde propriété physique, à utiliser lors de la retransmission du message. La première propriété physique et la seconde propriété physique sont différentes, c'est-à-dire qu'elles sont de types respectifs différents. Par exemple, le temps (par exemple l'instant de réception ou de retransmission du message), la fréquence, la puissance et la phase correspondent à quatre propriétés physiques de types différents.

En d'autres termes, le dispositif répéteur 40 réalise une conversion de la première propriété physique du message reçu vers une seconde propriété physique du message retransmis, la valeur de la seconde propriété physique du message retransmis étant représentative de la valeur de la première propriété physique du message reçu.

Tel qu'illustré par la figure 3, le procédé 50 de communication sans fil peut comporter en outre, si le réseau d'accès 30 est configuré pour déterminer la valeur de la première propriété physique du message reçu par le dispositif répéteur 40, des étapes de :

- 54 mesure, par le réseau d'accès 30, de la valeur de la seconde propriété physique du message reçu du dispositif répéteur 40,
- 55 détermination, par le réseau d'accès 30, de la valeur de la première propriété physique du message reçu par le dispositif répéteur 40 en fonction de la valeur de la seconde propriété physique mesurée pour le message reçu par le réseau d'accès 30.

Le message retransmis par le dispositif répéteur 40 est reçu par au moins une station de base 31 du réseau d'accès 30. En mesurant la valeur de la seconde propriété physique du message reçu par une station de base 31, on obtient une grandeur représentative de la valeur de la seconde propriété physique utilisée par le dispositif répéteur 40 pour retransmettre ce message. La valeur de la seconde propriété physique utilisée lors de la retransmission ayant été déterminée à partir de la valeur de la première propriété physique du message reçu par le dispositif répéteur 40 en appliquant une fonction connue du réseau d'accès 30, on comprend que le réseau d'accès 30 peut estimer la valeur de la première propriété physique à partir de la valeur de la seconde propriété physique mesurée pour le message reçu du dispositif répéteur 40.

On décrit à présent des exemples non limitatifs de mise en œuvre du procédé 50 de communication sans fil, en considérant différentes combinaisons de propriétés physiques pour la première propriété physique et la seconde propriété physique.

A) Conversion instant de réception / fréquence de retransmission

Suivant un premier exemple non limitatif, la première propriété physique correspond à l'instant auquel le message est reçu par le dispositif répéteur 40, et la seconde propriété physique correspond à la fréquence sur laquelle ledit dispositif répéteur 40 retransmet ledit message.

Dans la suite de la description, on se place de manière nullement limitative dans le cas où le dispositif répéteur 40, plutôt que de retransmettre immédiatement chaque message reçu, commence par collecter pendant toute la durée d'une fenêtre de collecte des messages émis par des terminaux 20. Ce mode de mise en œuvre est cependant également applicable lorsque le dispositif répéteur 40 retransmet immédiatement chaque message reçu.

La durée de la fenêtre de collecte doit permettre de collecter au moins deux messages qui ne sont pas reçus simultanément par le dispositif répéteur 40. Par conséquent, la durée de la fenêtre de collecte est avantageusement au moins deux fois supérieure à une durée de référence des messages émis par les terminaux 20. Si tous les messages ont la même durée, alors la durée de référence correspond à la durée de chaque message. Si les messages n'ont pas tous la même durée, la durée de référence correspond à la durée minimale que peut durer un message émis par un terminal 20. Dans des modes préférés de mise en œuvre, la durée de la fenêtre de collecte est au moins cinq fois supérieure à la durée de référence des messages, voire au moins dix fois supérieure à ladite durée de référence.

Après avoir collecté des messages pendant la durée de la fenêtre de collecte, le dispositif répéteur 40 retransmet les messages reçus. Suivant un exemple non limitatif, le dispositif répéteur 40 peut retransmettre simultanément au moins deux messages qui n'ont pas été reçus simultanément, afin de réduire l'occupation temporelle desdits messages lors de la retransmission par ledit dispositif répéteur 40. Le cas échéant, le dispositif répéteur 40, de préférence, retransmet simultanément tous les messages reçus, afin de minimiser l'occupation temporelle requise pour la retransmission.

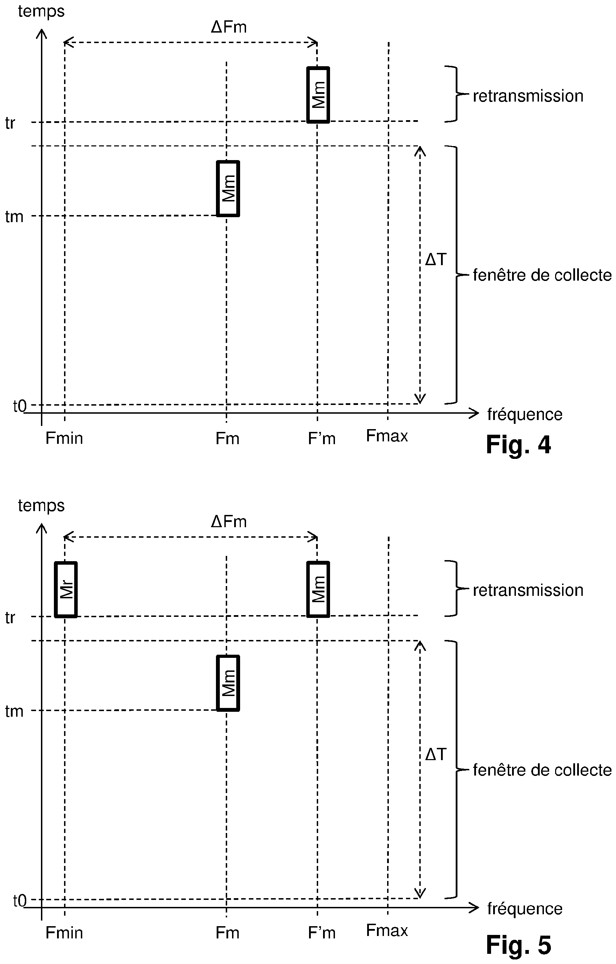

La figure 4 représente schématiquement un spectrogramme, c'est-à-dire une représentation fréquence / temps des signaux radioélectriques dans la bande fréquentielle utilisée pour l'émission et la retransmission sur le lien montant de messages par les terminaux 20 et par le dispositif répéteur 40.

Tel qu'illustré par la figure 4, la fenêtre de collecte, considérée comme étant de durée $\Delta T$, débute à un instant t0. Le dispositif répéteur 40 reçoit, à un instant tm (tm > t0), un message Mm émis par un terminal 20, sur une fréquence Fm à l'intérieur de la bande fréquentielle du lien montant.

Au cours de l'étape 51 de mesure, le dispositif répéteur 40 mesure l'instant tm de réception du message Mm puis détermine, au cours de l'étape 52 de détermination et en fonction de l'instant tm de réception, la fréquence F'm sur laquelle ledit message doit être retransmis à destination du réseau d'accès 30. La fréquence F'm de retransmission, qui dépend de l'instant tm de réception du message Mm, est donc le plus souvent différente de la fréquence Fm sur laquelle ledit message Mm a été reçu par le dispositif répéteur 40. Ensuite, le dispositif répéteur 40 retransmet le message Mm à un instant tr (tr ≥ t0 + $\Delta T$) et sur la fréquence F'm déterminée en fonction de l'instant tm.

Au cours de l'étape 52 de détermination, les fréquences de retransmission sont déterminées de telle sorte que deux messages reçus à des instants différents sont retransmis sur des fréquences différentes. De préférence, la fonction utilisée pour déterminer les fréquences de retransmission est telle qu'une fréquence à l'intérieur de la bande fréquentielle du lien montant ne correspond qu'à un seul instant de réception à l'intérieur de la fenêtre de collecte. Eventuellement, plusieurs fréquences à l'intérieur de la bande fréquentielle du lien montant peuvent correspondre à un même instant de réception à l'intérieur de la fenêtre de collecte. En effet, si deux messages sont reçus au même instant sur deux fréquences différentes, ceux-ci ne peuvent pas être retransmis simultanément sur la même fréquence (sauf éventuellement dans le cas d'un accès multiple par répartition en codes). En associant plusieurs fréquences possibles à un même instant de réception à l'intérieur de la fenêtre de collecte, ces deux messages pourront donc être retransmis sur des fréquences respectives différentes, toutes deux représentatives de l'instant auquel ces deux messages ont été reçus simultanément.

Dans des modes préférés de mise en œuvre, les fréquences de retransmission des messages sont déterminées de telle sorte qu'un écart fréquentiel entre une fréquence de retransmission d'un message et une fréquence de référence prédéterminée est représentatif d'un écart temporel entre un instant de référence et l'instant de réception dudit message par le dispositif répéteur 40. L'instant de référence est par exemple l'instant t0 de début de la fenêtre de collecte, l'instant (t0 + $\Delta T$) de fin de ladite fenêtre de collecte, un instant prédéfini à l'intérieur de la fenêtre de collecte, l'instant tr de retransmission du message, etc. La fréquence de référence est par exemple la fréquence minimale Fmin de la bande fréquentielle du lien montant, la fréquence maximale Fmax de la bande fréquentielle du lien montant, une fréquence prédéfinie à l'intérieur de la bande fréquentielle du lien montant, etc.

Dans la suite de la description, on se place de manière non limitative dans le cas où l'instant de référence correspond à l'instant t0 de début de la fenêtre de collecte, et où la fréquence de référence correspond à la fréquence minimale Fmin de la bande fréquentielle du lien montant. Par exemple, l'écart fréquentiel est proportionnel à l'écart temporel. Pour un message Mm reçu à un instant tm, l'écart fréquentiel $\Delta Fm$ déterminant la fréquence F'm de retransmission (F'm = Fmin + $\Delta Fm$) est par exemple déterminé selon l'expression suivante :

[Math. 1]

$$\Delta Fm = (Fmax - Fmin)x(tm - t0)/\Delta T$$

Le message Mm retransmis par le dispositif répéteur 40 est reçu par au moins une station de base 31 du réseau d'accès 30. En mesurant la fréquence de réception dudit message par une station de base 31, on obtient une estimation de la fréquence F'm de retransmission de ce message par le dispositif répéteur 40. La fréquence F'm de retransmission du message par le dispositif répéteur 40 ayant été déterminée à partir de l'instant tm de réception dudit message Mm en appliquant une fonction connue du réseau d'accès 30, on comprend donc que le réseau d'accès 30 peut estimer cet instant tm de réception à partir de la mesure de la fréquence de réception du message Mm reçu du dispositif répéteur 40.

Dans le cas décrit précédemment, dans lequel l'écart fréquentiel à une fréquence de référence est représentatif de l'écart temporel entre l'instant de réception et un instant de référence, plusieurs possibilités peuvent être envisagées pour déterminer l'instant tm de réception du message Mm par le dispositif répéteur 40.

Notamment, l'instant de référence, s'il n'est pas connu par le réseau d'accès 30, peut être par exemple indiqué dans un message de référence formé et transmis par le dispositif répéteur 40. Alternativement, et de manière non limitative, le réseau d'accès 30 peut estimer l'instant de référence à partir de l'instant trx auquel le message Mm retransmis a été reçu par une station de base 31. Par exemple, si l'instant de référence correspond à l'instant t0 de début de la fenêtre de collecte, et en considérant que le réseau d'accès connaît la durée $\Delta T$ de la fenêtre de collecte, l'instant de référence peut être estimé comme étant égal à (trx - $\Delta T$) en faisant les hypothèses suivantes :

- le temps de propagation entre le dispositif répéteur 40 et le réseau d'accès 30 est négligeable (de sorte que trx ≈ tr),
- le temps écoulé entre l'instant (t0 + $\Delta T$) de fin de la fenêtre de collecte et l'instant tr de retransmission des messages par le dispositif répéteur 40 est négligeable (de sorte que (t0 + $\Delta T$) ≈ tr).

Le dispositif répéteur 40 peut également inclure dans un message de référence des informations permettant au réseau d'accès 30 d'estimer l'instant de référence, comme par exemple la durée $\Delta T$ de la fenêtre de collecte, le temps écoulé entre l'instant de fin de la fenêtre de collecte et l'instant tr de retransmission du message Mm, etc.

La fréquence de référence, si elle n'est pas connue par le réseau d'accès 30, peut être par exemple indiquée dans un message de référence formé et transmis par le dispositif répéteur 40. Alternativement, le dispositif répéteur 40 peut former un message de référence (pouvant inclure des informations utiles pour estimer l'instant de référence) et l'émettre directement sur la fréquence de référence, qui appartient le cas échéant à la bande fréquentielle du lien montant. Une telle émission d'un message de référence Mr sur la fréquence de référence est avantageuse en ce qu'elle permet au réseau d'accès 30 d'estimer une éventuelle erreur introduite par le dispositif répéteur 40 sur la génération des fréquences. En mesurant la fréquence de réception du message de référence, et en comparant cette fréquence de réception à la fréquence de référence telle que générée par le réseau d'accès 30, il est possible de synchroniser en fréquences le dispositif répéteur 40 et la station de base 31 qui a reçu le message de référence. Une telle synchronisation en fréquences permet d'estimer avec une plus grande précision l'écart fréquentiel appliqué par le dispositif répéteur 40, et donc d'estimer avec une plus grande précision l'instant tm de réception du message Mm par le dispositif répéteur 40. La figure 5 représente schématiquement un spectrogramme qui reprend les mêmes éléments que la figure 4, et qui représente en outre un message de référence Mr qui est transmis simultanément avec le message Mm retransmis, sur la fréquence de référence qui correspond dans cet exemple à la fréquence minimale Fmin de la bande fréquentielle du lien montant.

### B) Conversion instant de réception / puissance de retransmission

Suivant un second exemple non limitatif, la première propriété physique correspond à l'instant auquel le message est reçu par le dispositif répéteur 40, et la seconde propriété physique correspond à la puissance avec laquelle ledit dispositif répéteur 40 retransmet ledit message.

Dans la suite de la description, on se place de manière nullement limitative, comme ci-dessus en référence à la figure 4, dans le cas où le dispositif répéteur 40, plutôt que de retransmettre immédiatement chaque message reçu, commence par collecter pendant toute la durée d'une fenêtre de collecte des messages émis par des terminaux 20. Ce mode de mise en œuvre est cependant également applicable lorsque le dispositif répéteur 40 retransmet immédiatement chaque message reçu.

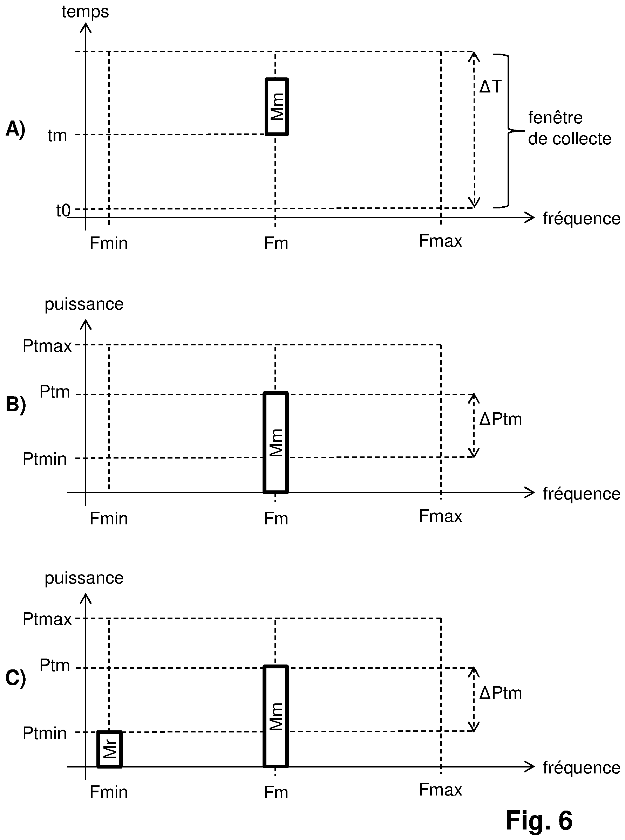

La figure 6 représente schématiquement un exemple de mise en œuvre de la conversion instant de réception / puissance de retransmission. Plus particulièrement, la partie A) de la figure 6 représente un spectrogramme, c'est-à-dire une représentation fréquence / temps des signaux radioélectriques dans la bande fréquentielle utilisée pour l'émission et la retransmission sur le lien montant d'un message par un terminal 20 et par le dispositif répéteur 40. La partie B) de la figure 6 représente un spectre fréquentiel de puissance du message retransmis par le dispositif répéteur 40.

Comme sur la figure 4, le dispositif répéteur 40 reçoit, à un instant tm (tm > t0), un message Mm émis par un terminal 20, sur une fréquence Fm à l'intérieur de la bande fréquentielle du lien montant. Le dispositif répéteur 40 retransmet le message Mm à un instant tr (tr ≥ t0 + $\Delta T$), par exemple sur la même fréquence Fm que celle sur laquelle ledit message a été reçu.

Au cours de l'étape 51 de mesure, le dispositif répéteur 40 mesure l'instant tm de réception du message Mm. Ensuite, le dispositif répéteur 40 détermine, au cours de l'étape 52 de détermination et en fonction de l'instant tm de réception, la puissance Ptm avec laquelle le message doit être retransmis à destination du réseau d'accès 30.

Au cours de l'étape 52 de détermination, les puissances de retransmission sont déterminées de telle sorte que deux messages reçus à des instants différents sont retransmis avec des puissances différentes.

Dans des modes préférés de mise en œuvre, les puissances de retransmission des messages sont déterminées de telle sorte qu'un écart de puissance entre une puissance de retransmission d'un message et une puissance de référence prédéterminée est représentatif d'un écart temporel entre un instant de référence et l'instant de réception dudit message par le dispositif répéteur 40. Comme précédemment, l'instant de référence est par exemple l'instant t0 de début de la fenêtre de collecte, l'instant (t0 + $\Delta T$) de fin de ladite fenêtre de collecte, un instant prédéfini à l'intérieur de la fenêtre de collecte, l'instant tr de retransmission du message, etc. La puissance de référence est par exemple une puissance maximale Ptmax de retransmission, une puissance minimale Ptmin de retransmission, une puissance prédéfinie entre la puissance maximale Ptmax et la puissance minimale Ptmin, etc.

Dans la suite de la description, on se place de manière non limitative dans le cas où l'instant de référence correspond à l'instant t0 de début de la fenêtre de collecte, et où la puissance de référence correspond à la puissance minimale Ptmin de retransmission. Par exemple, l'écart de puissance est proportionnel à l'écart temporel. Pour un message Mm reçu à un instant tm, l'écart de puissance $\Delta$Ptm déterminant la puissance Ptm de retransmission (Ptm = Ptmin + $\Delta$Ptm) est par exemple déterminé selon l'expression suivante :

$$[\text{Math. 2}]$$
$$\Delta Ptm = (Ptmax - Ptmin) \times (tm - t0)/\Delta T$$

Le message Mm retransmis par le dispositif répéteur 40 est reçu par au moins une station de base 31 du réseau d'accès 30. En mesurant la puissance de réception dudit message par une station de base 31, on obtient une estimation de la puissance Ptm de retransmission de ce message par le dispositif répéteur 40, aux pertes par propagation près.

Dans le cas décrit précédemment, dans lequel l'écart de puissance entre la puissance de retransmission et la puissance de référence est représentatif de l'écart temporel entre l'instant de réception et un instant de référence, plusieurs possibilités peuvent être envisagées pour déterminer l'instant de réception du message Mm par le dispositif répéteur 40.

Tout ce qui a été dit précédemment concernant l'instant de référence est également applicable dans le présent exemple.

La puissance de référence, si elle n'est pas connue par le réseau d'accès 30, peut être par exemple indiquée dans un message de référence formé et transmis par le dispositif répéteur 40. Les pertes par propagation peuvent être estimées selon toute méthode connue de l'homme de l'art. Ainsi, la puissance Ptm de retransmission du message Mm peut être estimée à partir de la mesure de la puissance avec laquelle le réseau d'accès 30 a reçu le message retransmis, et à partir de la connaissance a priori des pertes par propagation. L'écart de puissance peut ensuite être estimé afin de déterminer l'instant tm de réception du message Mm par le dispositif répéteur 40.

Alternativement, le dispositif répéteur 40 peut former un message de référence et l'émettre directement avec la puissance de référence, par exemple sur une fréquence différente de la fréquence Fm de retransmission du message Mm. Une telle émission d'un message de référence Mr avec la puissance de référence est avantageuse en ce qu'elle permet au réseau d'accès 30 de mesurer directement l'écart de puissance entre la puissance de référence et la puissance Ptm de retransmission, en supposant que les pertes par propagation sont les mêmes pour le message de référence et pour le message Mm retransmis.

La partie C) de la figure 6 représente schématiquement un spectre fréquentiel de puissance qui reprend les mêmes éléments que la partie B) de la figure 6, et qui représente en outre un message de référence Mr qui est transmis simultanément avec le message Mm retransmis, avec la puissance de référence qui correspond dans cet exemple à la puissance minimale Ptmin de retransmission. Dans cet exemple, le message de référence Mr est transmis sur la fréquence minimale Fmin de la bande fréquentielle du lien montant.

C) Conversion puissance de réception / fréquence de retransmission

Suivant un troisième exemple non limitatif, la première propriété physique correspond à la puissance avec laquelle le message est reçu par le dispositif répéteur 40, et la seconde propriété physique correspond à la fréquence sur laquelle ledit dispositif répéteur 40 retransmet ledit message.

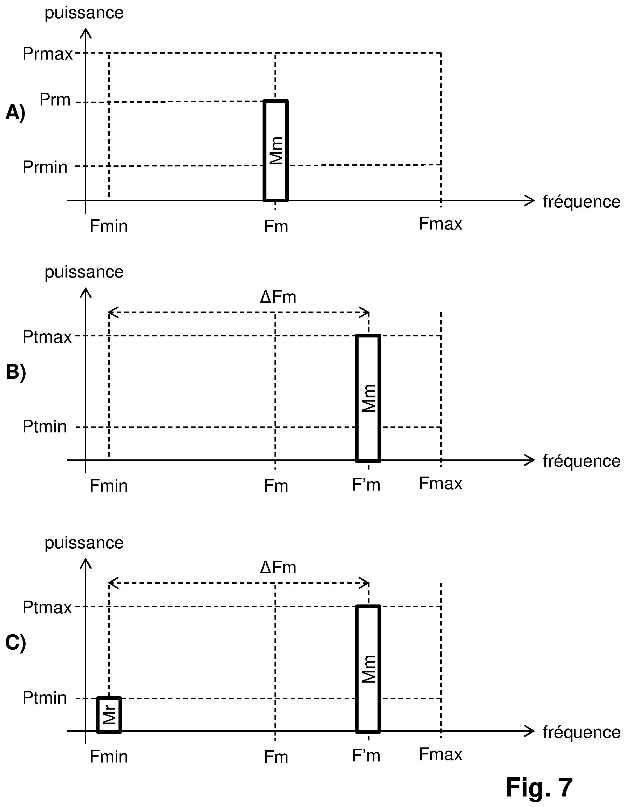

La figure 7 représente schématiquement un exemple de mise en œuvre de la conversion puissance de réception / fréquence de retransmission. Plus particulièrement, la partie A) de la figure 7 représente un spectre fréquentiel de puissance du message reçu d'un terminal 20. La partie B) de la figure 7 représente un spectre fréquentiel de puissance du message retransmis par le dispositif répéteur 40.

Tel qu'illustré par la partie A) de la figure 7, le dispositif répéteur 40 reçoit un message Mm, émis par un terminal 20, avec une puissance Prm et sur une fréquence Fm à l'intérieur de la bande fréquentielle du lien montant.

Au cours de l'étape 51 de mesure, le dispositif répéteur 40 mesure la puissance Prm de réception du message Mm puis détermine, au cours de l'étape 52 de détermination et en fonction de la puissance Prm de réception, la fréquence F'm sur laquelle ledit message doit être retransmis à destination du réseau d'accès 30. La fréquence F'm de retransmission, qui dépend de la puissance Prm de réception du message Mm, est donc le plus souvent différente de la fréquence Fm sur laquelle ledit message Mm a été reçu par le dispositif répéteur 40. Ensuite, tel qu'illustré par la partie B) de la figure 7, le dispositif répéteur 40 retransmet le message Mm sur la fréquence F'm déterminée en fonction de la puissance Prm.

Comme décrit précédemment, au cours de l'étape 52 de détermination, les fréquences de retransmission sont déterminées de telle sorte que deux messages reçus avec des puissances de réception différentes sont retransmis sur des fréquences différentes.

Dans des modes préférés de mise en œuvre, les fréquences de retransmission des messages sont déterminées de telle sorte qu'un écart fréquentiel entre une fréquence de retransmission d'un message et une fréquence de référence prédéterminée est représentatif d'un écart de puissance entre une puissance de référence et la puissance Prm de réception dudit message par le dispositif répéteur 40. La puissance de référence est par exemple la puissance maximale Prmax de réception par le dispositif répéteur 40, la puissance minimale Prmin de réception par ledit dispositif répéteur 40, une puissance prédéfinie entre la puissance maximale Prmax et la puissance minimale Prmin, etc. La fréquence de référence est par exemple la fréquence minimale Fmin de la bande fréquentielle du lien montant, la fréquence maximale Fmax de la bande fréquentielle du lien montant, une fréquence prédéfinie à l'intérieur de la bande fréquentielle du lien montant, etc.

Dans la suite de la description, on se place de manière non limitative dans le cas où la puissance de référence correspond à la puissance minimale Prmin de réception, et où la fréquence de référence correspond à la fréquence minimale Fmin de la bande fréquentielle du lien montant. Par exemple, l'écart fréquentiel est proportionnel à l'écart de puissance. Pour un message Mm reçu avec une puissance Prm, l'écart fréquentiel $\Delta$Fm déterminant la fréquence F'm de retransmission (F'm = Fmin + $\Delta$Fm) est par exemple déterminé selon l'expression suivante :

[Math. 3]

$$\Delta Fm = (Fmax - Fmin) \times (Prm - Prmin)/(Prmax - Prmin)$$

Le message Mm retransmis par le dispositif répéteur 40 est reçu par au moins une station de base 31 du réseau d'accès 30. En mesurant la fréquence de réception dudit message par une station de base 31, on obtient une estimation de la fréquence F'm de retransmission de ce message par le dispositif répéteur 40. La fréquence de retransmission du message par le dispositif répéteur 40 ayant été déterminée à partir de la puissance Prm de réception dudit message Mm en appliquant une fonction connue du réseau d'accès 30, on comprend donc que le réseau d'accès 30 peut estimer cette puissance Prm de réception à partir de la mesure de la fréquence de réception du message Mm reçu du dispositif répéteur 40.

Dans le cas décrit précédemment, dans lequel l'écart fréquentiel à une fréquence de référence est représentatif de l'écart de puissance entre la puissance Prm de réception et une puissance de référence, plusieurs possibilités peuvent être envisagées pour déterminer, au niveau du réseau d'accès 30, la puissance Prm de réception du message Mm par le dispositif répéteur 40.

Par exemple, la puissance de référence, si elle n'est pas connue par le réseau d'accès 30, peut être par exemple indiquée dans un message de référence formé et transmis par le dispositif répéteur 40.

La fréquence de référence, si elle n'est pas connue par le réseau d'accès 30, peut être par exemple indiquée dans un message de référence formé et transmis par le dispositif répéteur 40. Alternativement, le dispositif répéteur 40 peut former un message de référence (pouvant inclure des informations utiles pour estimer la puissance de référence) et l'émettre directement sur la fréquence de référence, qui appartient le cas échéant à la bande fréquentielle du lien montant. Le cas échéant, le réseau d'accès 30 peut mesurer directement l'écart fréquentiel entre la fréquence de référence et la fréquence F'm de retransmission, en calculant la différence entre les fréquences sur lesquelles le réseau d'accès 30 reçoit le message de référence et le message Mm retransmis par le dispositif répéteur 40.

La partie C) de la figure 7 représente schématiquement un spectre fréquentiel de puissance qui reprend les mêmes éléments que la partie B) de la figure 7, et qui représente en outre un message de référence Mr qui est transmis simultanément avec le message Mm retransmis, sur la fréquence de référence qui correspond dans cet exemple à la fréquence minimale Fmin de la bande fréquentielle du lien montant. Dans cet exemple, le message de référence Mr est transmis avec la puissance minimale Ptmin de retransmission.

D) Variantes de mise en œuvre

De manière plus générale, l'invention est applicable à tout type de conversion d'une première propriété physique du message reçu vers une seconde propriété physique du message retransmis, dès lors que la seconde propriété physique est différente de la première propriété physique.

Par exemple, si la première propriété physique correspond à l'instant auquel le message est reçu par le dispositif répéteur 40, alors la seconde propriété physique peut être l'une quelconque des propriétés physiques suivantes :

- fréquence sur laquelle ledit message est retransmis,
- puissance avec laquelle ledit message est retransmis,

- phase avec laquelle ledit message est retransmis.

Suivant un autre exemple, si la première propriété physique correspond à la puissance avec laquelle le message est reçu par le dispositif répéteur 40, alors la seconde propriété physique peut être l'une quelconque des propriétés physiques suivantes :

- instant auquel ledit message est retransmis,
- fréquence sur laquelle ledit message est retransmis,
- phase avec laquelle ledit message est retransmis.

Suivant un autre exemple non limitatif, si la première propriété physique correspond à la fréquence sur laquelle le message est reçu par le dispositif répéteur 40, alors la seconde propriété physique peut être l'une quelconque des propriétés physiques suivantes :

- instant auquel ledit message est retransmis,
- puissance avec laquelle ledit message est retransmis,
- phase avec laquelle ledit message est retransmis.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant un dispositif répéteur 40 sur un lien montant entre des terminaux 20 et un réseau d'accès 30 d'un système 10 de communication sans fil. Toutefois, l'invention est applicable également sur le lien descendant entre le réseau d'accès 30 et les terminaux 20, voire dans un système 10 de communication sans fil de type ad hoc pour permettre par exemple des échanges entre terminaux 20, sans infrastructure de type réseau d'accès 30. L'invention est donc généralisable à un dispositif répéteur 40 qui retransmet vers au moins un dispositif récepteur des messages reçus de dispositifs émetteurs. Sur le lien montant décrit précédemment, les dispositifs émetteurs correspondent à des terminaux 20 et/ou à d'autres dispositifs répéteurs, tandis que les dispositifs récepteurs correspondent à des stations de base 31 et/ou à d'autres dispositifs répéteurs. Sur le lien descendant décrit précédemment, les dispositifs émetteurs correspondent à des stations de base 31 et/ou à d'autres dispositifs répéteurs, tandis que les dispositifs récepteurs correspondent à des terminaux 20 et/ou à d'autres dispositifs répéteurs.

En outre, dans le cas où un message de référence est formé et émis par le dispositif répéteur 40, il est à noter qu'il est possible d'émettre un seul message de référence pour plusieurs messages retransmis. Par exemple, dans le cas où le dispositif répéteur 40 collecte des messages reçus pendant toute la durée d'une fenêtre de collecte, alors il est possible d'émettre un seul message de référence avec tous les messages retransmis correspondant à des messages reçus pendant ladite fenêtre de collecte.

En outre, le message de référence, éventuellement transmis par le dispositif répéteur 40, peut prendre toute forme adaptée. Notamment, le message de référence peut se présenter, dans certains modes de réalisation, sous la forme d'une fréquence porteuse non modulée (c'est-à-dire un signal sinusoïdal), en particulier lorsque le message de référence est transmis sur la fréquence de référence et/ou avec la puissance de référence.

## Revendications

1. - Procédé (50) de communication sans fil entre un dispositif émetteur (20) et un dispositif récepteur (30) par l'intermédiaire d'un dispositif répéteur (40), ledit dispositif émetteur émettant un message dans une bande fréquentielle qui est reçu par ledit dispositif répéteur, ledit dispositif répéteur retransmettant dans ladite bande fréquentielle le message reçu à destination dudit dispositif récepteur, **caractérisé en ce que** le procédé comporte des étapes de :

   - (51) mesure, par le dispositif répéteur (40), de la valeur d'une première propriété physique du message reçu du dispositif émetteur (20),
   - (52) détermination, par le dispositif répéteur et en fonction de la valeur de la première propriété physique mesurée pour le message reçu, de la valeur d'une seconde propriété physique à utiliser lors de la retransmission dudit message, la seconde propriété physique étant différente de la première propriété physique,
   - (53) retransmission, par le dispositif répéteur (40), du message à destination du dispositif récepteur (30), en utilisant la valeur de la seconde propriété physique déterminée en fonction de la valeur de la première propriété physique mesurée pour le message reçu.

2. - Procédé (50) selon la revendication 1, dans lequel la valeur de la seconde propriété physique du message retransmis est déterminée de telle sorte qu'un écart entre ladite valeur de la seconde propriété physique dudit message retransmis et une valeur de référence prédéterminée de ladite seconde propriété physique est représentatif d'un écart entre une valeur de référence de la première propriété physique et la valeur de ladite première propriété physique mesurée pour le message reçu.

**3.** - Procédé (50) selon la revendication 2, comportant une étape de formation et de transmission, par le dispositif répéteur, d'un message de référence en utilisant la valeur de référence de la seconde propriété physique.

**4.** - Procédé (50) selon l'une quelconque des revendications 1 à 3, comportant des étapes de :

- (54) mesure, par le dispositif récepteur (30), de la valeur de la seconde propriété physique du message reçu du dispositif répéteur (40),
- (55) détermination, par le dispositif récepteur (30), de la valeur de la première propriété physique du message reçu par le dispositif répéteur (40) en fonction de la valeur de la seconde propriété physique mesurée pour le message reçu par le dispositif récepteur.

**5.** - Procédé (50) selon l'une quelconque des revendications 1 à 4, dans lequel la première propriété physique est l'instant auquel le message est reçu par le dispositif répéteur (40), et la seconde propriété physique est une propriété physique parmi les propriétés physiques suivantes :

- fréquence sur laquelle ledit message est retransmis,
- puissance avec laquelle ledit message est retransmis,
- phase avec laquelle ledit message est retransmis.

**6.** - Procédé (50) selon l'une quelconque des revendications 1 à 4, dans lequel la première propriété physique est la puissance avec laquelle le message est reçu par le dispositif répéteur (40), et la seconde propriété physique est une propriété physique parmi les propriétés physiques suivantes :

- instant auquel ledit message est retransmis,
- fréquence sur laquelle ledit message est retransmis,
- phase avec laquelle ledit message est retransmis.

**7.** - Procédé (50) selon l'une quelconque des revendications 1 à 4, dans lequel la première propriété physique est la fréquence sur laquelle le message est reçu par le dispositif répéteur (40), et la seconde propriété physique est une propriété physique parmi les propriétés physiques suivantes :

- instant auquel ledit message est retransmis,
- puissance avec laquelle ledit message est retransmis,
- phase avec laquelle ledit message est retransmis.

**8.** - Dispositif répéteur (40) adapté à recevoir un message émis dans une bande fréquentielle par un dispositif émetteur (20) et à retransmettre dans ladite bande fréquentielle le message reçu à destination d'un dispositif récepteur (30), **caractérisé en ce que** ledit dispositif répéteur comporte des moyens configurés pour :

- mesurer la valeur d'une première propriété physique du message reçu du dispositif émetteur,
- déterminer, en fonction de la valeur de la première propriété physique mesurée pour le message reçu, la valeur d'une seconde propriété physique à utiliser lors de la retransmission dudit message, la seconde propriété physique étant différente de la première propriété physique,
- retransmettre le message à destination du dispositif récepteur (30), en utilisant la valeur de la seconde propriété physique déterminée en fonction de la valeur de la première propriété physique mesurée pour le message reçu.

**9.** - Dispositif répéteur (40) selon la revendication 8, configuré pour déterminer la valeur de la seconde propriété physique du message retransmis de telle sorte qu'un écart entre ladite valeur de la seconde propriété physique dudit message retransmis et une valeur de référence prédéterminée de ladite seconde propriété physique est représentatif d'un écart entre une valeur de référence de la première propriété physique et la valeur de ladite première propriété physique mesurée pour le message reçu.

**10.** - Dispositif répéteur (40) selon la revendication 9, comportant des moyens configurés pour former et transmettre un message de référence en utilisant la valeur de référence de la seconde propriété physique.

**11.** - Système (10) de communication sans fil comportant un dispositif récepteur (30) et un dispositif répéteur (40) selon l'une quelconque des revendications 8 à 10, **caractérisé en ce que** le dispositif récepteur (30) comporte des moyens configurés pour :

- mesurer la valeur de la seconde propriété physique du message reçu du dispositif répéteur (40),
- déterminer la valeur de la première propriété physique du message reçu par le dispositif répéteur (40) en fonction de la valeur de la seconde propriété physique mesurée pour le message reçu par ledit dispositif récepteur.

**Patentansprüche**

**1.** Verfahren (50) zur drahtlosen Kommunikation zwischen einer Sendervorrichtung (20) und einer Empfängervorrichtung (30) mittels einer Repeater-Vorrichtung (40), wobei die Sendervorrichtung eine Nachricht in einem Frequenzband sendet, die von der Repeater-Vorrichtung empfangen wird, wobei die Repeater-Vorrichtung die empfangene Nachricht in dem Frequenzband an die Empfängervorrichtung weiterleitet, **dadurch gekennzeichnet, dass** das Verfahren die folgenden Schritte beinhaltet:

- (51) Messen durch die Repeater-Vorrichtung (40) des Wertes einer ersten physikalischen Eigenschaft der von der Sendervorrichtung (20) empfangenen Nachricht,
- (52) Bestimmen durch die Repeater-Vorrichtung und in Abhängigkeit von dem Wert der gemessenen ersten physikalischen Eigenschaft für die empfangene Nachricht, des Wertes einer zweiten physikalischen Eigenschaft, die beim Weiterleiten der Nachricht zu verwenden ist, wobei sich die zweite physikalische Eigenschaft von der ersten physikalischen Eigenschaft unterscheidet,
- (53) Weiterleiten durch die Repeater-Vorrichtung (40) der Nachricht an die Empfängervorrichtung (30), durch Verwenden des Werts der zweiten physikalischen Eigenschaft, die in Abhängigkeit von dem Wert der ersten physikalischen Eigenschaft bestimmt wird, die für die empfangene Nachricht gemessen wird.

**2.** Verfahren (50) nach Anspruch 1, wobei der Wert der zweiten physikalischen Eigenschaft der weitergeleiteten Nachricht derart bestimmt wird, dass eine Abweichung zwischen dem Wert der zweiten physikalischen Eigenschaft der weitergeleiteten Nachricht und einem vorbestimmten Bezugswert der zweiten physikalischen Eigenschaft repräsentativ für eine Abweichung zwischen einem Bezugswert der ersten physikalischen Eigenschaft und dem Wert der ersten physikalischen Eigenschaft ist, die für die empfangene Nachricht gemessen wird.

**3.** Verfahren (50) nach Anspruch 2, das einen Schritt zur Bildung und Übertragung durch die Repeater-Vorrichtung einer Bezugsnachricht durch Verwenden des Bezugswerts der zweiten physikalischen Eigenschaft beinhaltet.

**4.** Verfahren (50) nach einem der Ansprüche 1 bis 3, die folgenden Schritte beinhaltend:

- (54) Messen durch die Empfängervorrichtung (30) des Wertes der zweiten physikalischen Eigenschaft der von der Repeater-Vorrichtung (40) empfangenen Nachricht,
- (55) Bestimmen durch die Empfängervorrichtung (30) des Werts der ersten physikalischen Vorrichtung der von der Repeater-Vorrichtung (40) empfangenen Nachricht in Abhängigkeit von dem Wert der zweiten physikalischen Eigenschaft, der von der Empfängervorrichtung für die empfangene Nachricht gemessenen wird.

**5.** Verfahren (50) nach einem der Ansprüche 1 bis 4, wobei die erste physikalische Eigenschaft der Zeitpunkt ist, bei dem die Nachricht von der Repeater-Vorrichtung (40) empfangen wird, und die zweite physikalische Eigenschaft eine physikalische Eigenschaft aus den folgenden physikalischen Eigenschaften ist:

- Frequenz, mit der die Nachricht weitergeleitet wird,
- Leistung, mit der die Nachricht weitergeleitet wird,
- Phase, mit der die Nachricht weitergeleitet wird.

**6.** Verfahren (50) nach einem der Ansprüche 1 bis 4, wobei die erste physikalische Eigenschaft die Leistung ist, mit der die Nachricht von der Repeater-Vorrichtung (40) empfangen wird, und die zweite physikalische Eigenschaft eine physikalische Eigenschaft aus den folgenden physikalischen Eigenschaften ist:

- Zeitpunkt, zu dem die Nachricht weitergeleitet wird,
- Frequenz, mit der die Nachricht weitergeleitet wird,
- Phase, mit der die Nachricht weitergeleitet wird.

7. Verfahren (50) nach einem der Ansprüche 1 bis 4, wobei die erste physikalische Eigenschaft die Frequenz ist, mit der die Nachricht von der Repeater-Vorrichtung (40) empfangen wird, und die zweite physikalische Eigenschaft eine physikalische Eigenschaft aus den folgenden physikalischen Eigenschaften ist:

- Zeitpunkt, zu dem die Nachricht weitergeleitet wird,
- Leistung, mit der die Nachricht weitergeleitet wird,
- Phase, mit der die Nachricht weitergeleitet wird.

8. Repeater-Vorrichtung (40), die angepasst ist, um eine Nachricht zu empfangen, die in einem Frequenzband von einer Sendervorrichtung (20) gesendet wird, und um die empfangene Nachricht in dem Frequenzband an eine Empfängervorrichtung (30) weiterzuleiten, **dadurch gekennzeichnet, dass** die Repeater-Vorrichtung Mittel beinhaltet, die konfiguriert sind zum:

- Messen des Wertes einer ersten physikalischen Eigenschaft der von der Sendervorrichtung empfangenen Nachricht,
- Bestimmen in Abhängigkeit von dem Wert der ersten für die empfangene Nachricht gemessenen physikalischen Eigenschaft, des Wertes einer zweiten physikalischen Eigenschaft, die beim Weiterleiten der Nachricht zu verwenden ist, wobei sich die zweite physikalische Eigenschaft von der ersten physikalischen Eigenschaft unterscheidet,
- Weiterleiten der Nachricht an die Empfängervorrichtung (30) durch Verwenden des Werts der zweiten physikalischen Eigenschaft, die in Abhängigkeit von dem Wert der ersten physikalischen Eigenschaft bestimmt wird, die für die empfangene Nachricht gemessen wird.

9. Repeater-Vorrichtung (40) nach Anspruch 8, die konfiguriert ist, um den Wert der zweiten physikalischen Eigenschaft der weitergeleiteten Nachricht derart zu bestimmen, dass eine Abweichung zwischen dem Wert der zweiten physikalischen Eigenschaft der weitergeleiteten Nachricht und einem vorbestimmten Bezugswert der zweiten physikalischen Eigenschaft repräsentativ für eine Abweichung zwischen einem Bezugswert der ersten physikalischen Eigenschaft und dem Wert der ersten physikalischen Eigenschaft ist, der für die empfangene Nachricht gemessen wird.

10. Repeater-Vorrichtung (40) nach Anspruch 9, die Mittel beinhaltet, die konfiguriert sind, um eine Bezugsnachricht durch Verwenden des Bezugswerts der zweiten physikalischen Eigenschaft zu bilden und zu übertragen.

11. System (10) zur drahtlosen Kommunikation, das eine Empfängervorrichtung (30) und eine Repeater-Vorrichtung (40) nach einem der Ansprüche 8 bis 10 beinhaltet, **dadurch gekennzeichnet, dass** die Empfängervorrichtung (30) Mittel beinhaltet, die konfiguriert sind zum:

- Messen des Wertes der zweiten physikalischen Eigenschaft der von der Repeater-Vorrichtung (40) empfangenen Nachricht,
- Bestimmen des Werts der ersten physikalischen Eigenschaft der von der Repeater-Vorrichtung (40) empfangenen Nachricht in Abhängigkeit von dem Wert der zweiten physikalischen Eigenschaft, die von der Empfängervorrichtung für die empfangene Nachricht gemessenen wird.

**Claims**

1. - Method (50) for wireless communication between a sender device (20) and a receiver device (30) via a repeater device (40), said sender device transmitting a message in a frequency band which is received by said repeater device, said repeater device retransmitting the received message in said frequency band to said receiver device, **characterised in that** the method comprises the steps of:

- (51) measuring, with the repeater device (40), the value of a first physical property of the message received from the sender device (20),
- (52) determining, with the repeater device and as a function of the value of the first physical property measured for the received message, the value of a second physical property to be used for the retransmission of said message, the second physical property being different from the first physical property,
- (53) retransmitting, with the repeater device (40), the message to the receiver device (30), using the value of the second physical property determined as a function of the value of the first physical property measured for the received message.

2. - Method (50) according to claim 1, wherein, the value of the second physical property of the retransmitted message is determined such that a difference between said value of the second physical property of said retransmitted message and a predetermined reference value of said second physical property is representative of a difference between a reference value of the first physical property and the value of said first physical property measured for the received message.

3. - Method (50) according to claim 2, comprising a step of forming and of transmitting, with the repeater device, a reference message using the reference value of the second physical property.

4. - Method (50) according to any of claims 1 to 3, comprising the steps of:

- (54) measuring, with the receiver device (30), the value of the second physical property of the message received from the repeater device (40),
- (55) determining, with the receiver device (30), the value of the first physical property of the message received by the repeater device (40) as a function of the value of the second physical property measured for the message received by the receiver device.

5. - Method (50) according to any of claims 1 to 4, wherein the first physical property is the time at which the message is received by the repeater device (40), and the second physical property is one of the following physical properties:

- the frequency on which said message is retransmitted,
- the power with which said message is retransmitted,
- the phase with which said message is retransmitted.

6. - Method (50) according to any of claims 1 to 4, wherein the first physical property is the power with which the message is received by the repeater device (40), and the second physical property is one of the following physical properties:

- the time at which said message is retransmitted,
- the frequency on which said message is retransmitted,
- the phase with which said message is retransmitted.

7. - Method (50) according to any of claims 1 to 4, wherein the first physical property is the frequency on which the message is received by the repeater device (40), and the second physical property is one of the following physical properties:

- the time at which said message is retransmitted,
- the power with which said message is retransmitted,
- the phase with which said message is retransmitted.

8. - Repeater device (40) adapted to receive a message transmitted in a frequency band by a sender device (20) and to retransmit the received message in said frequency band to a receiver device (30), **characterised in that** said repeater device comprises means configured to:

- measure the value of a first physical property of the message received from the sender device,
- determine, as a function of the value of the first physical property measured for the received message, the value of a second physical property to be used for the retransmission of said message, the second physical property being different from the first physical property,
- retransmit the message to the receiver device (30), using the value of the second physical property determined as a function of the value of the first physical property measured for the received message.

9. - Repeater device (40) according to claim 8, configured to determine the value of the second physical property of the retransmitted message such that a difference between said value of the second physical property of said retransmitted message and a predetermined reference value of said second physical property is representative of a difference between a reference value of the first physical property and the value of said first physical property measured for the received message.

10. - Repeater device (40) according to claim 9, comprising means configured to form and transmit a reference message using the reference value of the second physical property.

11. - System (10) for wireless communication comprising a receiver device (30) and a repeater device (40) according to any of claims 8 to 10, **characterised in that** the receiver device (30) comprises means configured to:

- measure the value of the second physical property of the message received from the repeater device (40),
- determine the value of the first physical property of the message received by the repeater device (40) as a function of the value of the second physical property measured for the message received by said receiver device.

**Fig. 1**

**Fig. 2**

dispositif répéteur

| Mesure de la valeur d'une première propriété physique d'un message reçu | 51 |

| Détermination d'une valeur d'une seconde propriété physique pour la retransmission du message | 52 |

| Retransmission du message en utilisant la valeur de seconde propriété physique | 53 |

50

réseau d'accès

| Mesure de la valeur de la seconde propriété physique du message reçu | 54 |

| Détermination de la valeur de la propriété physique du message reçu par le dispositif répéteur | 55 |

**Fig. 3**

Fig. 4

Fig. 5

**Fig. 6**

Fig. 7